# EUROPEAN PATENT SPECIFICATION

(11) **EP 0 801 070 B1**
(45) Date of publication and mention of the grant of the patent: **16.04.2003**
(21) Application number: 96830537.5
(22) Date of filing: 18.10.1996
(51) Int. Cl.: C07F 17/00, C07F 15/00

(54) **Process of preparing platinum compound**
Verfahren zur Herstellung von Platin Verbindungen
Procédé de préparation de composés du platine

(30) Priority: 10.04.1996 JP 8695496
(43) Date of publication of application: 15.10.1997
(60) Divisional application: 03000861.9
(73) Proprietor: DEBIOPHARM S.A., 1000 Lausanne 9 (CH)
(72) Inventor: Taniuchi, Jun-ichi, c/o TANAKA KIKINZOKU KOGYO KK, Tokyo (JP); Nakanishi, Chihiro, c/o TANAKA KIKINZOKU KOGYO KK, Tokyo (JP); Ohnishi, Yuko,c/o TANAKA KININZOKU KOGYO K.K., Tokyo (JP)
(74) Representative: Pellegri, Alberto

(56) References cited:
- EP-A- 0 147 926
- EP-A- 0 376 076
- EP-A- 0 567 438
- US-A- 4 169 846
- US-A- 4 175 133

## Description

### Background of the Invention

The present invention relates to a process of preparing a cis-Pt(II) complex of a 1,2-cyclohexane diamine isomer having a formula II, as described hereunter, useful as raw material of a carcinostatic substance, especially to a process of preparing cis-oxalato(trans-ℓ-1,2-cyclohexane-diamine) Pt(II) at a high yield with producing substantially no by-products.

Documents EP-A-0 567 438 and JP-A-5-301884 describe the preparation of cis-oxalato(trans-1,2-cyclohexanediamine) Pt(II) starting from potassium tetrachloroplatinate and involving the reaction of the intermediate obtained cis-dichloro(trans-1,2-cyclohexanediamine) Pt(II) complex with 2 equivalents or less (1.7 EQ.) of silver nitrate, this necessitating a purification step using a reverse osmolisis membrane.

Document EP-A-0 147 926 describes the preparation of (1,1-cyclobutanedicarboxylato)-(1,2-diaminocyclohexane) Pt(II) starting from an isolated dichloro (1,2-cyclo-hexanediamine) Pt(II) complex and using less than 2 equivalents of silver nitrate (1.7 eq.).

Document US-A-4,175,133 describes the preparation of malonato (1,2-diaminocyclo-hexane) Pt(II) starting from the isolated and purified dichloro (1,2-diamino-cyclohexane) Pt(II) complex and using less than 2 equivalents of silver nitrate (1.8 eq.).

Document US-A-4,169,846 describes the preparation of uracil(diaminocyclohexane) Pt(II) complexes starting from the isolated and purified dichloro (1,2-diamino-cyclohexane) Pt(II) complex and using less than 2 equivalents of silver nitrate (1.8 eq.).

Document JP-A-7-25890 describes the preparation of cis-oxalato(trans-1,2-cyclo-hexanediamine) Pt(II) starting from potassium tetra-chloroplatinate and involving the reaction of the intermediate obtained cis-dichloro(trans-1,2-cyclohexanediamine) Pt(II) complex with less than 2 equivalents of silver nitrate (1.4 eq.).

The components of formula I and II are as follows: 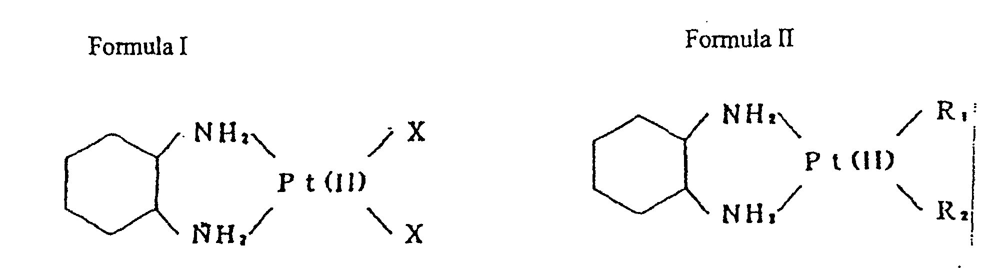 R1 and R2 forming a semicircular ring having the following formulae III, IV, V, VI, VII or VIII

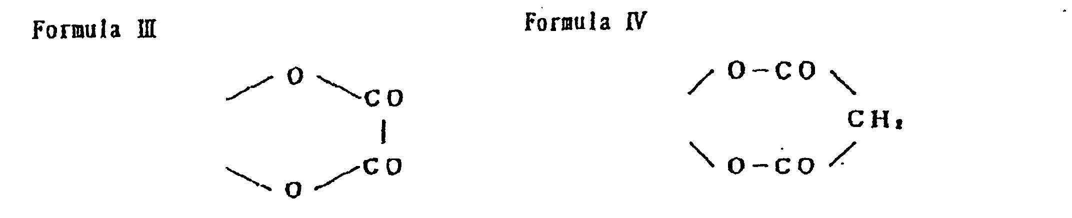

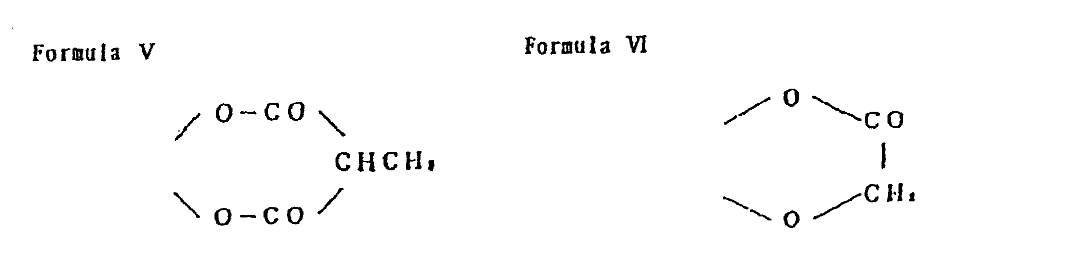

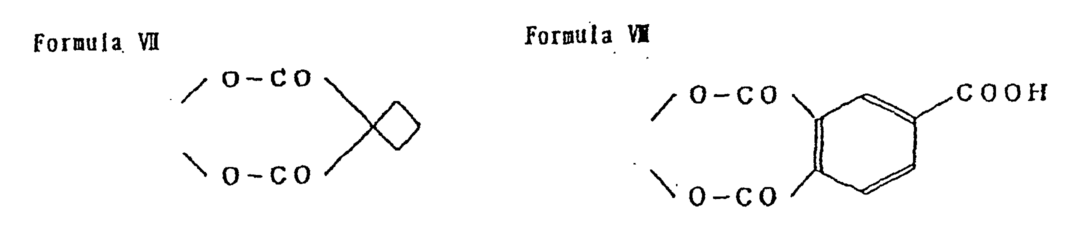

Platinum compounds having Formulae I (a steric configuration of 1,2-cyclohexanediamine is cis, trans-d, or trans-ℓ, and X is Cl or Br) and II (a steric configuration of 1,2-cyclohexanediamine is cis, trans-d, or trans-ℓ, and R₁ and R₂ form a semicircular ring having Formulae III, IV, V, VI, VII and VIII) are known to have a carcinostatic effect, and the compound II may be prepared by adding two molar equivalents of a silver ion solution to a cis-Pt(II) complex dihalogen compound of a 1,2-cyclohexanediamine isomer having the Formula I, removing silver chloride or silver bromide produced by means of filtration, adding NaI or KI and active carbon to the filtrate, completely removing, by means of filtration, the unreacted complex of the Formula I, by-products of the complex of Formula I and the unreacted silver ion which have been converted into their iodo compounds, and adding an organic dibasic acid to the filtrate (Japanese patent laid open No. 5-194332).

One of the most important subjects in performing process management and technology management on the mass production of the above preparation is stringent management of a liquid volume which has been discussed in relation with workability and reliability. It is required that a reliable, efficient and high yield process in which excess and shortage of supply of a liquid to a reaction due to an unavoidable error in the proper liquid volume management especially in the mass production do not occur is established.

For example in the above process, when a slight excess of two molar equivalents of a silver ion solution (silver nitrate) is eventually added, especially no problem arises because NaI and KI are removed by filtration in the next step. When, on the other hand, a slight deficiency of the silver is added, a cis-Pt(II) complex dihalogen compound of 1,2-cyclohexanediamine isomer (Formula I) is left and may have an adverse effect on the original medicine.

### Summary of the Invention

In view of the above drawbacks, the object of the present invention is to provide a process of preparing a stable cis-Pt(II) complex of a 1.2-cyclohexanediamine isomer having a Formula II without any residual cis-Pt(II) complex dihalogen compound of a 1,2-cyclohexanediamine isomer having a Formula I.

An aspect of the present invention is a process of preparing a platinum complex which comprises reacting a cis-Pt(II) complex dihalogen compound of a 1,2-cyclohexanedianine isomer having a Formula I (a steric configuration of 1,2-cyclohexanediamine is cis, trans-d or trans-ℓ, X is Cl or Br) with two molar weight of a silver ion solution, removing silver chloride or silver bromide produced, adding NaI or KI and active carbon for converting the unreacted compound of the Formula I, by-products of the Formula I and the silver ion into the respective iodo compounds, separating the iodo compound, and then adding an organic dibasic acid to the filtrate to prepare a cis-Pt(II) complex of a 1,2-cyclohexanediamine isomer having a Formula II (a steric configuration of 1,2-cyclohexanediamine is cis, trans-d or trans-ℓ, and R₁ and R₂ form a semicircular ring having Formulae III, IV, V, VI, VII and VIII) characterized in that 2.01 to 2.1 molar equivalent of the silver ion solution is added.

In accordance with the aspect of the present invention, a cis-Pt(II) complex of 1,2-cyclohexanediamine isomer of Formula II containing no residual cis-Pt(II) complex dihalogen compound of 1,2-cyclohexanediamine isomer of Formula I can be obtained. The target complex may be obtained with excellent workability, high stability and high reliability.

### Detailed Description of the Invention

In the aspect of the present invention, the characteristic feature is the addition of the silver ion solution of which a molar equivalence is slightly larger than two equivalence, that is, 2.01 to 2.1 molar equivalence. The reason why the lower limit is restricted is that when an insufficient amount is added, a cis-Pt(II) complex dihalogen compound of 1,2-cyclohexanediamine isomer of Formula I remains which can be prevented by the silver ion so that the silver ion less than 2.01 molar equivalence cannot produce the above effect. When over 2.1 molar equivalence of the silver ion is added, the additional KI for the treatment of the excess silver ion is required in the following procedures so that the efficiency is also decreased. More preferable range is between 2.015 and 2.05 molar equivalence.

The reason why 0.05 to 0.14 molar equivalence of NaI or KI is added is that it is employed for treating the excess silver ion. No effect can be produced below 0.05 molar equivalence while a yield of the compound of Formula II is decreased over 0.14 molar equivalence. More preferable range is between 0.055 and 0.09 molar equivalence.

### Examples

Examples of the present invention will be described.

### Example 1

After 1700 g of potassium tetrachloroplatinate and 467.8 g (4.1 mol) of trans-(-)-1,2-cyclohexanediamine were dissolved in 10 ℓ of water and mixed, cake-like cis-[dichloro(trans-(-)-1,2-cyclohexanediamine) Pt(II) was obtained without recrystallization at a yield of 98.84 %. This was suspended in 16 ℓ of water to which was added 3 kg of water in which 1390 g of silver nitrate (which corresponded to 2.02 equivalence of cis-[dichloro(trans-(-)-1,2-cyclohexanediamine) Pt(II)] and 0.02 equivalence was in excess) was dissolved. After the stirring in dark for more than 24 hours and less than 42 hours at room temperature, the precipitate of most of silver chloride produced was removed by means of filtration. To this filtrate, was added a solution of 40.8 g of KI (which corresponded to 0.06 equivalence, and 0.04 equivalence was in excess with respect to the 0.02 equivalence excess of the above cis-[dichloro (trans(-)-1,2-cyclohexanediamine) Pt(II)]) dissolved in 100 ml of water. After the stirring for 36 to 72 hours, active carbon was added. Then, AgI and the compound of Formula I, and the iodo compounds which were the by-products and the active carbon were completely removed by filtration. After 512.64 g of oxalic acid was added to the residual filtrate followed by standing for two hours, the crude crystal of the target cis-oxalato (tans-(-)-1,2-cyclohexanediamine) Pt(II) was obtained at a yield of 60%. Then, after 933.23 g of this crude crystal was dissolved in 38 ℓ of water under heating, it was cooled to room temperature. The precipitated white crystal was collected by filtration and washed with a small amount of water. The target platinum complex was obtained after the drying of the obtained crystal.

### Comparative Example

The target platinum complex was obtained in the same conditions except that 1377 g of silver nitrate (2.00 equivalence of the cis-dichloro (trans-(-)-1,2-cyclohexanediamine) Pt(II) and 28.10 g of KI were employed.

Thereafter, as a result of the confirmation of the existence or not of the residue of the cis-Pt(II) complex dihalogen compound of the 1,2-cyclohexanediamine of Formula I, a slight amount thereof was detected in Comparative Example while none was detected in Example 1.

## Claims

1. A process of preparing a cis-Pt(II) complex of a 1,2-cyclohexanediamine isomer having a formula II 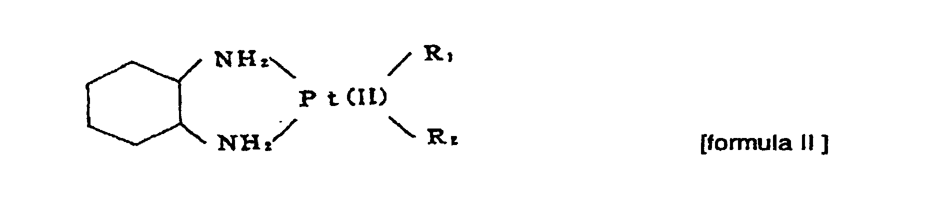 wherein the steric configuration of 1,2-cyclohexanediamine is cis, trans-d, or trans-I, and R1 and R2 form a semicircular ring having formulae III, IV, V, VI, VII or VIII, 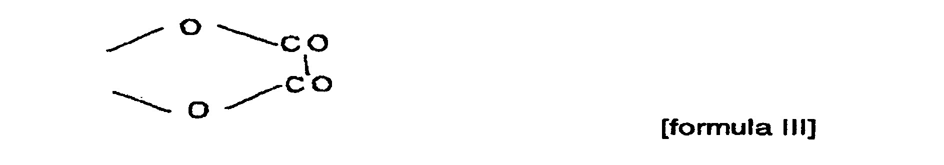 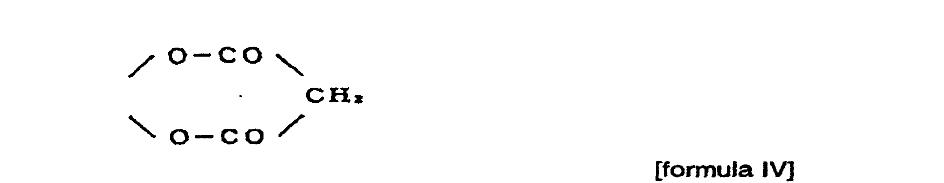 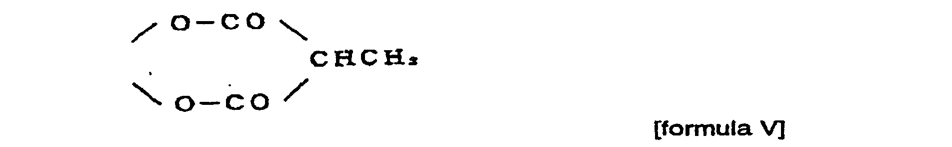 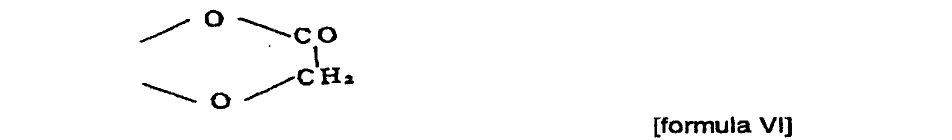 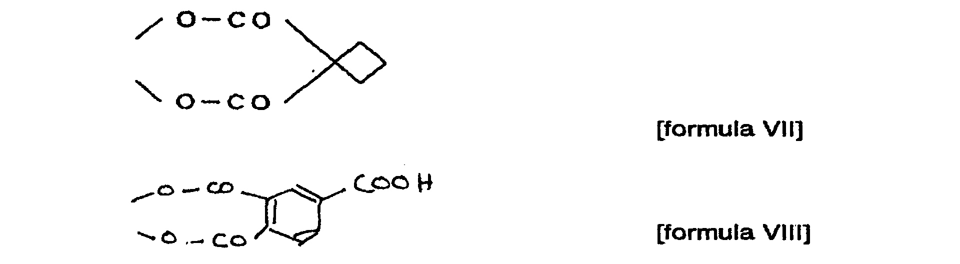 which comprises reacting a cis-Pt(II) complex dihalogen compound of a 1,2-cyclohexanediamine isomer having a formula I 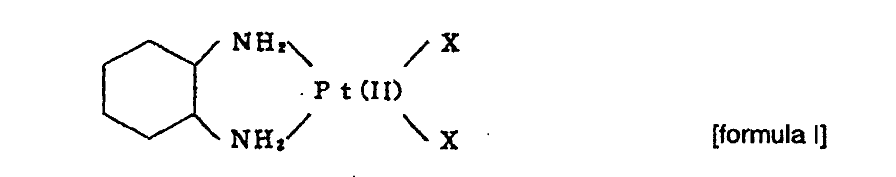 wherein the steric configuration of 1,2-cyclohexanediamine is cis, trans-d, or trans-I, X is Cl or Br, with an amount of a silver ion in solution, removing silver chloride or silver bromide produced, adding NaI or KI and active carbon for converting the unreacted compound of the formula I, by-products of the formula I and silver ion into respective iodide compounds, separating the iodide compounds, and then adding an organic dibasic acid to the filtrate, **characterized in that** the amount of the silver ion in solution is comprised between 2.01 to 2.1 molar equivalent with reference of said cis-Pt(II) complex dihalogen compound.

2. The process as claimed in claim 1, wherein 0.05 to 0.14 molar equivalent of NaI or KI is added for treating unreacted silver ions excessively added in the solution.

3. A process according to any preceding claims of preparing a cis-Pt(II) complex of a 1,2-cyclohexanediamine isomer having a formula II 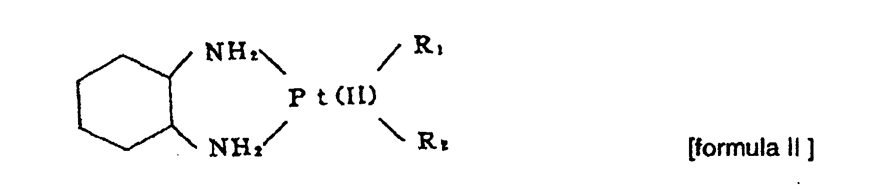 wherein the steric configuration of 1,2-cyclohexanediamine is trans-I, and R1 and R2 form a semicircular ring having formula III 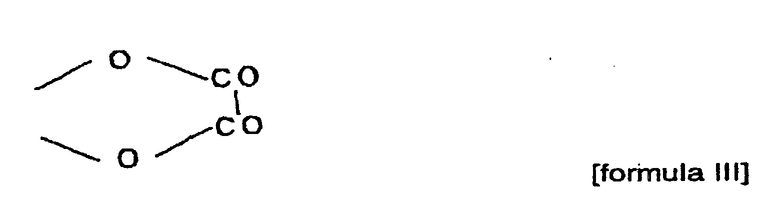 wherein said organic dibasic acid is oxalic acid.

## Patentansprüche

1. Verfahren zum Herstellen eines cis-Pt(II)-Komplexes von einem 1,2-Cyclohexandiamin Isomer mit der Formel II 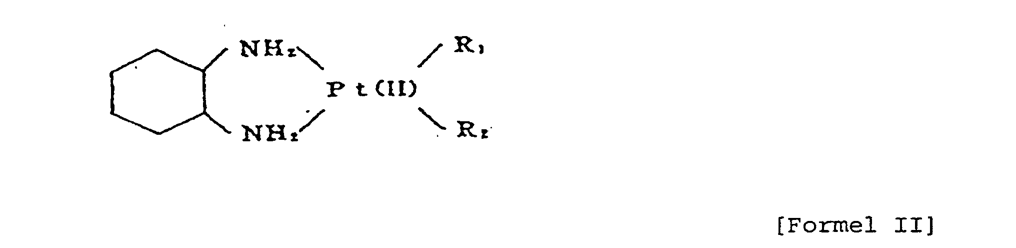 worin die sterische Konfiguration des 1,2-Cyclohexandiamins cis, trans-d, oder trans-1 ist, und R1 und R2 einen halbkreisförmigen Ring mit den Formeln III, IV, V, VI, VII oder VIII bilden, 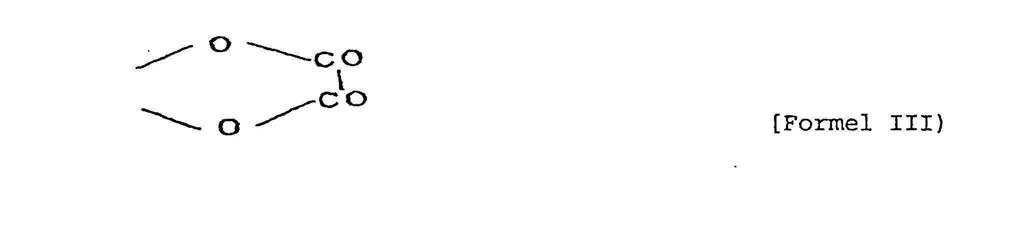 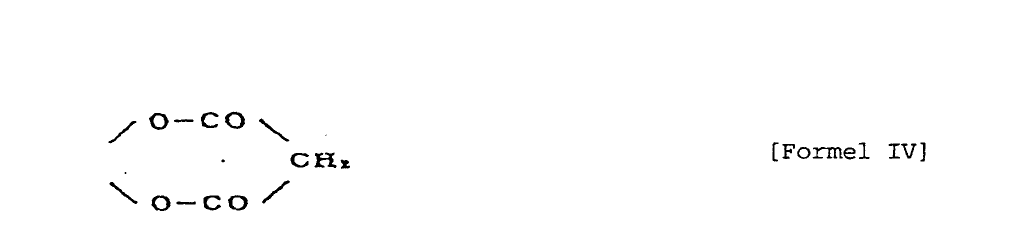 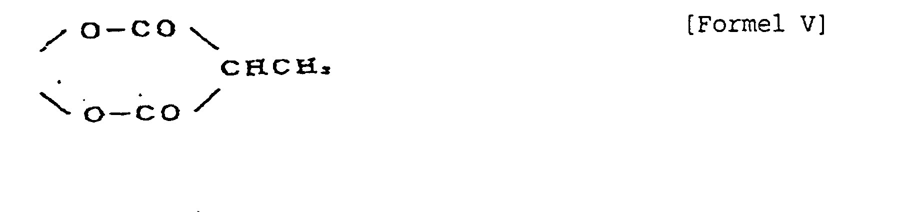 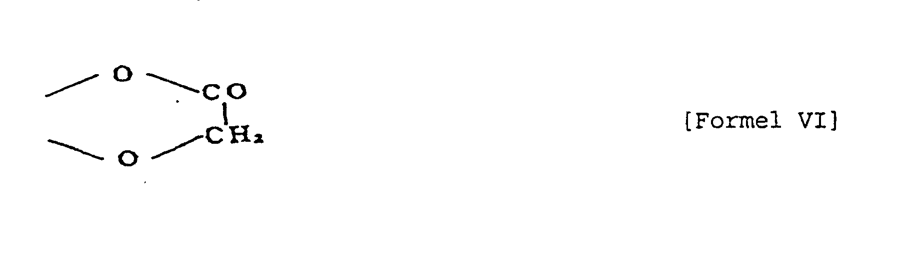 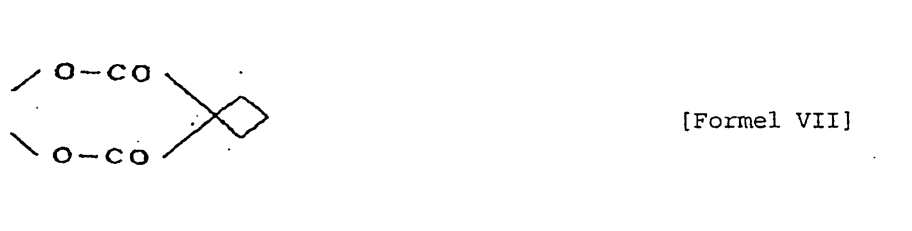 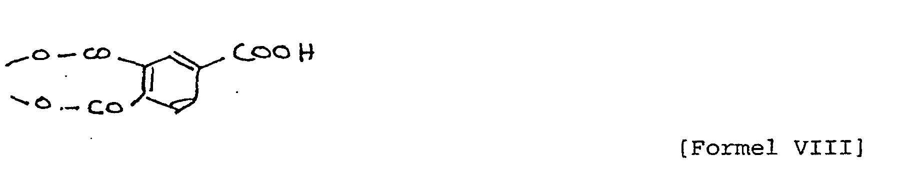 welches folgende Schritte umfaßt:
Umsetzen einer cis-Pt(II)-Komplex Dihalogen-Verbindung eines 1,2-Cyclohexandiamin Isomers mit der Formel I 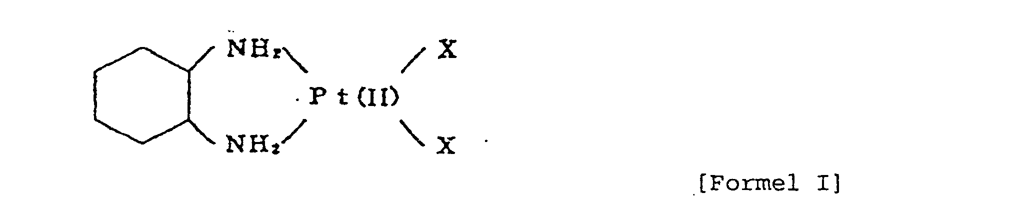
worin die sterische Konfiguration des 1,2-Cyclohexandiamins cis, trans-d oder trans-l ist, X, Cl oder Br ist, mit einer Menge eines Silberions in Lösung; Entfernen des hergestellten Silberchlorids oder Silberbromids; Addieren von NaI oder KI und Aktivkohle zum Konvertieren der nicht umgesetzten Verbindung der Formel I, der Nebenprodukte der Formel I und der Silberionen in die entsprechenden Iodidverbindungen; Abtrennen der Iodidverbindungen; und dann Addieren einer organischen zweibasigen Säure zu dem Filtrat, dadurch charakterisiert, daß die Menge der Silberionen in Lösung zwischen 2,01 bis 2,1 Molar Equivalente in Bezug auf besagte cis-Pt(II)-Komplex-Dihalogenverbindung umfaßt.

2. Verfahren wie in Anspruch 1 beansprucht, worin 0,05 bis 0,14 molare Equivalente von NaI oder KI zum Behandeln nicht umgesetzter Silberionen addiert werden, die in übermäßiger Weise zu der Lösung addiert wurden.

3. Verfahren gemäß einem der vorhergehenden Ansprüche zum Herstellen eines cis-Pt(II)-Komplexes eines 1,2-Cyclohexandiamin-Isomers mit der Formel II 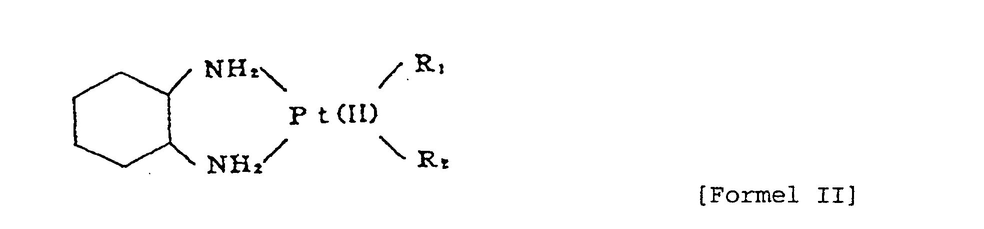 worin die sterische Konfiguration des 1,2-Cyclohexandiamins trans-1 ist, und R1 und R2 einen halbkreisförmigen Ring mit der Formel III bilden 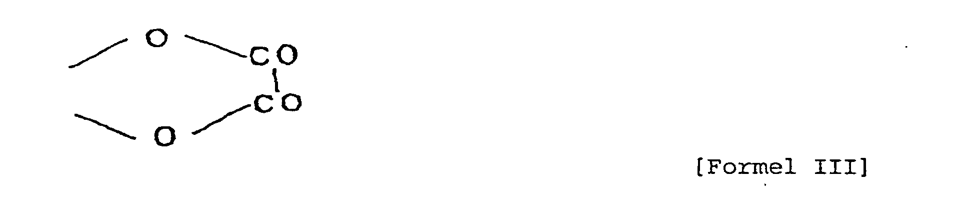 worin besagte organische dibasische Säure Oxalsäure ist.

## Revendications

1. Procédé de préparation d'un complexe cis-Pt(II) d'un isomère de 1,2-cyclohexanediamine ayant la formule II 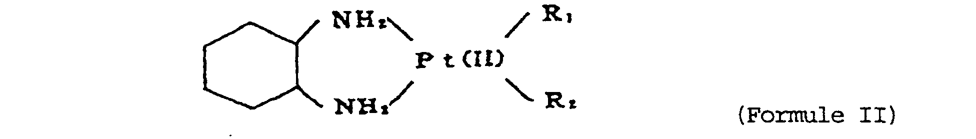 dans lequel la configuration stérique du 1,2-cyclohexanediamine est cis, trans-d ou trans-I, et R1 et R2 forment un anneau semi-circulaire ayant la formule III, IV, V, VI, VII ou VIII, 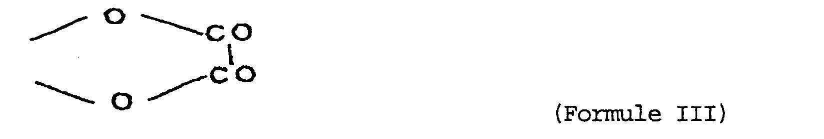 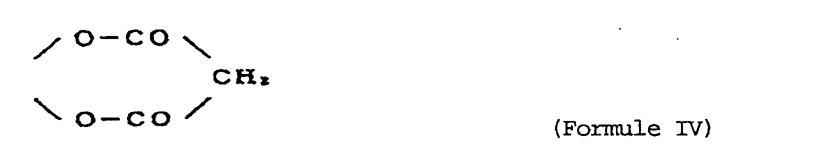 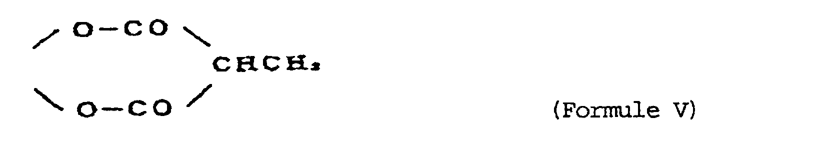 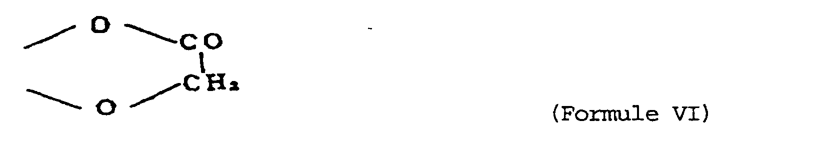 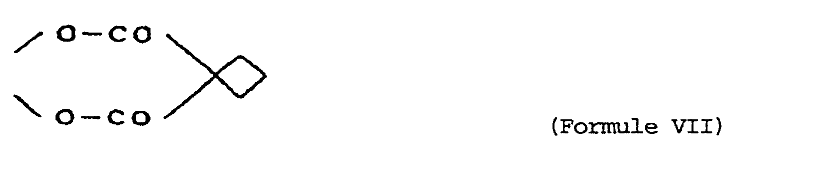 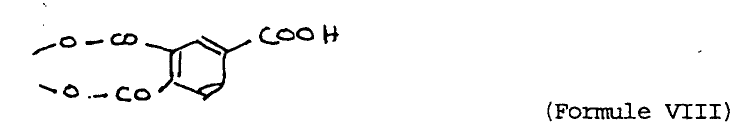 qui comprend les étapes consistant à :
faire réagir un composé dihalogène complexe cis-Pt(II) d'un isomère de 1,2-cyclohexanediamine ayant la formule I 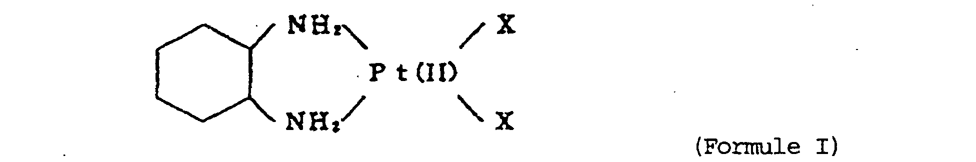
où la configuration stérique de 1,2-cyclohexanediamine est cis, trans-d ou trans-I, X est Cl ou Br, avec une quantité d'ions argent en solution,
enlever le chlorure d'argent ou le bromure d'argent produit,
ajouter NaI ou KI et du carbone actif pour convertir les composés n'ayant pas réagi de la formule I, les sous-produits de la formule I et les ions argent en composés d'iode respectifs,
séparer les composés d'iode, et ensuite
ajouter un acide organique dibasique au filtrat,
**caractérisé en ce que** la quantité d'ions argent en solution est comprise entre 2,01 et 2,1 équivalents molaires par rapport au composé dihalogène complexe cis-Pt(II).

2. Procédé selon la revendication 1, dans lequel 0,05 à 0,14 équivalent molaire de NaI ou KI est ajouté pour traiter des ions argent n'ayant pas réagi ajoutés en excès dans la solution.

3. Procédé selon l'une quelconque des revendications précédentes de préparation d'un complexe cis-Pt(II) d'un isomère de 1,2-cyclohexanediamine ayant la formule II 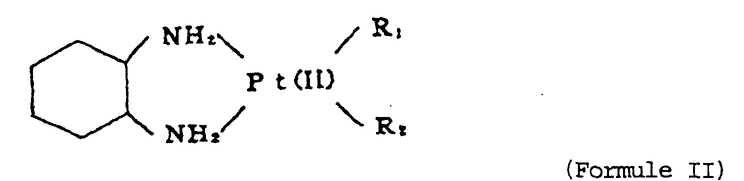 où la configuration stérique de 1,2-cyclohexanediamine est trans-I, et R1 et R2 forment un anneau semi-circulaire de formule III 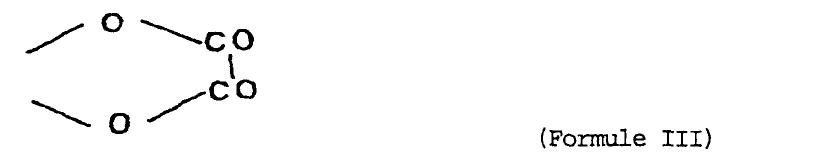 où l'acide organique dibasique est de l'acide oxalique.
